# EUROPEAN PATENT APPLICATION

(11) **EP 3 258 678 A1**
(43) Date of publication of application: **20.12.2017**
(21) Application number: 16174685.4
(22) Date of filing: 16.06.2016
(51) Int. Cl.: H04M 1/725, G06F 3/0346

(54) **APPLICATION AND METHOD TO PREVENT UNDUE CALL IN A MOBILE DEVICE**

(71) Applicant: Nagravision S.A., 1033 Cheseaux-sur-Lausanne (CH)
(72) Inventor: LE PELERIN, Alain, 1020 Renens (CH)
(74) Representative: Leman Consulting S.A.

(57) **Abstract**

The present disclosure is in the field of mobile device applications, in particular applications intended to control undue transmission/reception of calls or messages.

A call supervision application to prevent undue communication actions in a mobile device, said mobile device having a calling application acting to call in response of a communication action, said call supervision application transmitting a command to enable/disable the communication action of a call to the calling application, said mobile device has a rectangular shape with a small upper and lower section, and a larger right and left section and further comprising orientation detection means, said call supervision application receiving from the orientation detection means the current orientation of the mobile device, said call supervision application sending a command to the calling application to enable/disable the initiation of a call according to the current orientation detected.

## Description

### Introduction

The present disclosure is in the field of mobile device applications, in particular applications intended to control undue transmission of calls or messages.

### Prior Art

The variety of applications available for mobile devices is huge and some applications are dedicated to send messages or initiate a call with a single action from the user. For instance, elderly people can install an application on their mobile devices which will then show a clearly visible emergency button on the screen. With one touch from the user, this emergency button can send a pre-recorded message to an emergency center. Other one-touch applications can connect the user to an emergency center, by directly calling an operator who will then listen to the user and take the appropriate actions. Another application proposes to call the police emergency center and to transmit the GPS coordinates in order to quickly locate the location of the caller.

These applications have in common that with one pressure of an icon or a button, the mobile device initiates a transmission to a pre-registered call center.

One problem is that calls are sometimes made by mistake by pressing one button. There is always a thin balance between the simplicity and quick access of making a call and the risk of initiating a call by mistake.

Another problem is the involuntary taking of a call. When the mobile device receives an incoming call, depending of the configuration of the mobile device, a simple pressure on one button can accept the incoming call. If the pressure was involuntary, the mobile device connects with the caller and the conversations around the phone can be listened by the caller.

### Brief description of the figures

The present disclosure will be better understood thanks to the attached figures in which :
- figure 1 illustrates a mobile device with the different sides,
- figure 2 illustrates the mobile device pointing downward, within an inhibit zone,
- figure 3 illustrates the mobile device pointing downward, outside of the inhibit zone
- figure 4 illustrates the elements of the mobile device.

### Detailed description

The aim of the present disclosure is to propose an application acting on the one-touch communication applications and providing an automatic and simple way to avoid such applications to receive or initiate a call by mistake, in particular in situations in which the mobile device is not supposed to take such an action. According to one aspect of this disclosure, it is considered that the mobile device is in a particular orientation to initiate a communication action.

By "communication action" we understand the action triggering the response to an incoming call, the action to initiate a voice call or the action for transmitting a pre-recorded message (text message).

A "call" can be an incoming call or an outgoing call. We consider that the transmission of a pre-recorded text is also a call.

According to one aspect of the disclosure, the "communication action" is triggered by a single pressure on a dedicated button which could be a physical button or an icon on the screen.

In order to avoid unwanted communication actions, a call supervision application is proposed to prevent undue communication actions in a mobile device, said mobile device having a calling application to initiate or receive a call, said call supervision application transmitting a command to enable/disable the communication action by the calling application, said mobile device further comprising orientation detection means, said call supervision application receiving from the orientation detection means the actual orientation of the mobile device, said call supervision application sending a command to the calling application to enable/disable the communication action according to the orientation detected.

The present method advantageously enables a call depending on the orientation of the mobile device of the user. In some orientations, the mobile device is not supposed to accept a communication action. For example, when the top of the mobile device is pointing downward, a call is blocked since it is considered that this orientation is not compatible with a willingful call. The mobile device comprises sensors (such as a gyroscope) playing the role of orientation detection means. The orientation detected by the gyroscope is communicated to the call supervision application.

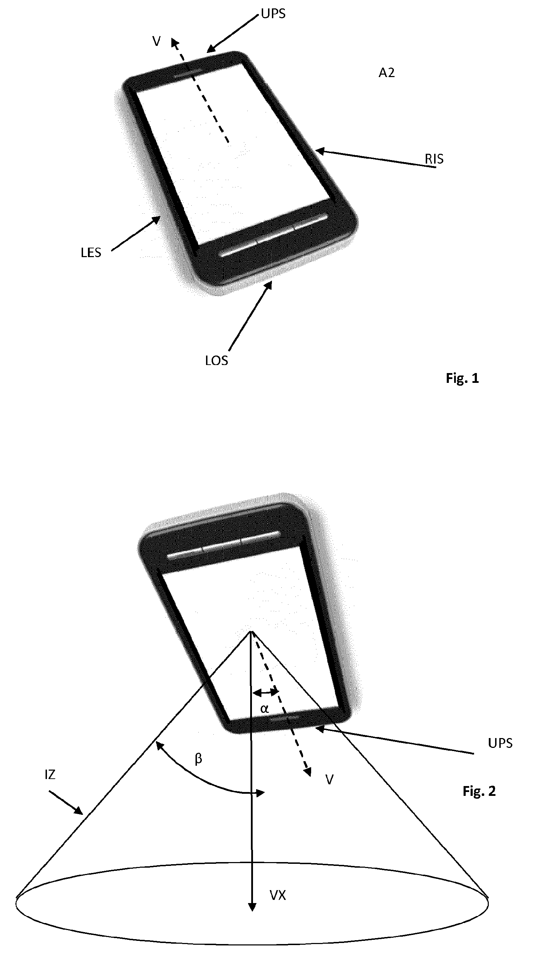

Four sides of a mobile device 1 are illustrated on the figure 1. The mobile device 1 has a default orientation illustrated by a vector V. A loudspeaker (not shown) is usually located close to a lower side LOS and one or more buttons are located close to a lower side LOS.

It will be well understood that this is a not limitative example and any device which can provide a call can be used.

The mobile device also has a right side RIS and a left side LES.As shown in figure 2 is an arbitrary vertical cone for which the top is aligned with the center of the mobile device 1. This cone defines an inhibit zone IZ having a vertical axis VX. The cone defines a 3D space in which the vector V can be located. An angle α is defined as the angle between the vertical axis VX and the vector V. When the mobile device is pointing downward, the call supervision application defines which angle is acceptable since it will probably not be in a full vertical position. The inhibit zone is defined in the memory of the call supervision application and the current vector V is checked against the cone. In the figure 2, the vector V is within the inhibit zone and therefore the call supervision application sends a disable command to the calling application.

The call supervision application determines on a regular basis the position of the vector V. It checks if the vector V is within the inhibit zone IZ.

According to another embodiment, this determination is executed on request by the call supervision application, at a time of a communication action. The calling application requests the authorisation to the call supervision application before executing the action.

When the position of the vector V is determined, the call supervision application sends a corresponding message to the calling application. When the message is an enabling command, the calling application can execute the communication action for example by initiating a call. It is to be noted that the mobile device can comprise several calling applications, therefore the call supervision application communicates with all of them.

The applications can communicate together using the operating system language of the mobile device. For example, the book "Android Application Development Cookbook: 93 Recipes for Building Winning Apps", page 159, describes how to develop an application to block outgoing calls. As a consequence, the call supervision application can communicate with the other applications in order to enable/disable outgoing calls.

In one example, to define the inhibit zone IZ, the call supervision application stores an angular value β. This is the maximum angular value of the cone calculated from a vertical axis VX as shown in figure 2. Once the call supervision application has received orientation data from the orientation detection means, it calculates the vector V starting from the center of the phone and extending to amid-section of the upper side. If the vector V is pointing upward, the call supervision application enables the calling application. If the vector is pointing downward, the call supervision application determines the angle α between the vector V and the vertical axis VX. This angle α is compared with the inhibit zone defined by the angle β of the inhibit zone related to the vertical axis VX.

Each time the mobile device is pointing downward, with an angle of the vector V within the inhibit zone, the call supervision application sends a disable command. Otherwise when the calculation of the vector V determines that the vector is outside the inhibit zone, the call supervision application sends an enabling command. These commands are sent on a request from a calling application, i.e. before executing the communication action, or are sent by the calling supervision application each time a change in the orientation of the mobile device is detected.

In this first embodiment, the orientation related to the upper side UPS is controlled by the call supervision application.

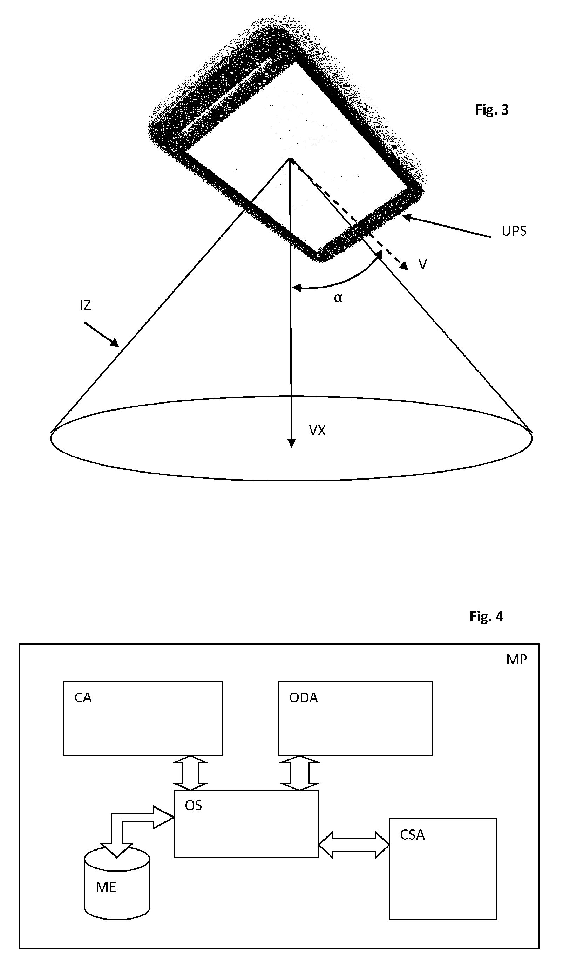

As shown in figure 3, the mobile device is pointing downward and the vector V is outside of the inhibit zone. In this position, the communication action is enabled.

According to one embodiment, when a calling application has received a disable command, said application can send a message back to the call supervision application informing the latter that a communication action was made by the user. The call supervision application can then request a confirmation that the disable of the call is to be applied. A popup window is open on the screen of the mobile device. In order to enable the call the user should execute two operations, preferably located at different places on the screen. This advantageously avoids that a single pressure, the one that initiated the call request to the calling application, allows the call and then bypasses the blocking.

In figure 4 some components of the mobile device MP are illustrated according to the present disclosure. An operating system OS is the heart of the mobile device and allows the different applications to communicate. The operating system OS is in charge of a memory ME storing the applications and data. One application ODA is in charge of detecting the movements of the mobile device. The orientation detection application ODA is in charge of collecting row data of movement sensors embedded in the mobile device and once processed, passing the movement data to the call supervision application CSA. The calling application CA is one of the applications in the mobile device. As previously mentioned, the mobile device can comprise several calling applications, each having access to the resources managed by the operating system OS.

The call supervision application can be configured to act on all calls (the term "call" as defined above) or only a subset of these calls. According to one example, the call supervision application can enable/disable only the incoming calls. The call supervision application has no action on the outgoing calls. The user can define for each category of calls if the enabling/disabling function should by activated.

According to the category explained above, the settings may be as below:

| **Type of call** | **Enable call supervision?** |
|---|---|
| Incoming Calls | Yes |
| Voice outgoing calls | No |
| Message outgoing calls | No |

The orientation detection application ODA can access the data produced by the movement sensors via the operating system OS. The movement sensor may use a combination of an accelerometer and a gyroscope, which may be implemented in the portable device in form of Micro Electro-Mechanical Systems (MEMS). A particular software program managing the MEMS converts electrical signals output from the MEMS into digital data. The resulting digital data, once organized, in a table for example, become machine interpretable movement data sets produced by the sensors.

The accelerometer measures linear acceleration and tilt angle. Single and multi-axis accelerometers detect the combined magnitude and direction of linear, rotational and gravitational acceleration. They can be used to provide limited motion sensing functionality. For example, a device with an accelerometer can detect rotation from vertical to horizontal state in a fixed location. Accelerometers are mainly used for motion sensing applications in portable devices such as for example for changing orientation of the screen from portrait to landscape and vice versa.

In most devices, piezoelectric, piezoresistive and capacitive components are commonly used to convert a mechanical motion into an electrical signal. Piezoelectric accelerometers rely on piezoceramics (e.g. lead zirconatetitanate) or single crystals (e.g. quartz, tourmaline). They are unmatched in terms of their upper frequency range, low packaged weight and high temperature range. Piezoresistive accelerometers are preferred in high shock applications. Capacitive accelerometers typically use a silicon micro-machined sensing element. Their performance is superior in the low frequency range and they can be operated in servo mode to achieve high stability and linearity. Accelerometers in form of MEMS are the simplest MEMS devices possible, consisting of little more than a cantilever beam with a proof mass. Damping results from the residual gas sealed in the device. Under the influence of external accelerations the proof mass deflects from its neutral position. This deflection is measured in an analog or digital manner. Most commonly, the capacitance between a set of fixed beams and a set of beams attached to the proof mass is measured. This method is simple, reliable, and inexpensive. Integrating piezoresistors in the springs to detect spring deformation, and thus deflection, is a good alternative, although a few more process steps are needed during the fabrication sequence.

Most micromechanical accelerometers operate in-plane, that is, they are designed to be sensitive only to one direction in the plane of the die. By integrating two devices perpendicularly on a single die a two-axis accelerometer can be made. By adding another out-of-plane device three axes can be measured. Such a combination may have much lower misalignment error than three discrete models combined after packaging.

The gyroscope measures the angular rate of rotational movement around one or more axes. The gyroscope can measure complex motion accurately in multiple dimensions, tracking the position and rotation of a moving object unlike the accelerometer which can only detect the fact that an object has moved or is moving in a particular direction. Further, unlike the accelerometer, the gyroscope is not affected by errors related to external environmental factors such as gravitational and magnetic fields. Therefore, a gyroscope greatly enhances the motion sensing capabilities of devices and is used for advanced motion sensing applications such as for example full gesture and movement detection and simulation in video gaming.

There are three rotational movements measured by the gyroscope: yaw which is pivoting from right to left (α), roll which designates the movement from right rocking left (angle β) and finally the pitch that marks the movement a body latch of the front to the back (angle γ). Figure 4 illustrates the three rotational angles (α, β, γ) defined as Euler angles representing a sequence of three elemental rotations about the axes of a coordinate system (x, y, z).

Mechanical gyroscopes are based on the Coriolis effect, which is a phenomenon observed when an object is moving with a certain velocity in a rotating frame of reference. To an observer in this frame of reference, the object seems to change its trajectory. The apparent force on the object is called Coriolis force, and is proportional to the rotation speed of the frame of reference. Its direction is perpendicular to the rotation direction of the reference frame and to the velocity of the moving object. By measuring the effect of this force on a proof mass which is moving at a known velocity, the rotational speed of the frame of reference, that is to say the one of the object the sensor is placed on, can be determined. Since the proof mass has to be in constant motion for the Coriolis effect to appear.

Gyroscopes in form of MEMS are mostly based on resonant structures. Those structures have to be put in motion using an actuator, which can be for instance a piezoelectric crystal put under a varying electric tension or two electrodes which are alternatively switched on and off. Usually, the physical principle used for the actuator is the same as the one used to measure a change in frequency of the proof-mass. An example of a resonant structure used for MEMS gyroscopes is what is called a tuning fork, which is the combination of two beams of same length and material on a common shaft, which is excited at their resonance frequency, resulting in a type of balanced oscillator where the two beams oscillate 180 degrees out-of-phase. Compared to a single beam, this structure is more energy efficient and more accurate. When a rotation of the system occurs in a direction perpendicular to the vibration direction of the beams, the resulting Coriolis force changes the frequency of the vibration, which can be detected using a piezoelectric or piezoresistive material on the common shaft.

Another structure used for MEMS gyroscopes is a vibrating plate, which can be in round or rectangular shape. The plate is suspended by spring structures such as folded beams. An actuator makes this structure vibrate at a specific frequency and phase. This vibration can be in an in-plane direction (x-axis), in which case a rotation normal to the plane (in the z-axis) causes the device to vibrate in the other in-plane direction (y-axis), inducing for example a change of capacitance.

## Claims

1. Call supervision application to prevent undue communication actions in a mobile device, said mobile device comprising a calling application for performing a call in response to a communication action, the call supervision application transmitting a command to enable or disable the communication action of performing a call by the calling application, said mobile device further comprising orientation detection means, said call supervision application receiving from the orientation detection means the orientation of the mobile device, said call supervision application sending a command to the calling application to enable or disable the initiation of a call according to the orientation of the mobile device.

2. Call supervision application of claim 1 wherein the call supervision application sends a disabling command to the calling application when the orientation detection means detect that the mobile device is is pointing in a downward position.

3. Call supervision application of claim 1 or 2, wherein the calling application is configured to initiate a voice call or send a text message or receive a call.

4. Call supervision application of any of the claims 1 to 3, wherein the calling application is a one button activation call.

5. Call supervision application of claim 4, wherein the one button activation call is an emergency application initiating call with one action of a user.

6. Call supervision application of any of the claims 1 to 5, wherein the calling application is configured to notify the call supervision application that a call was requested while a disabling command was received, said call supervision application being configured to prompt the user to confirm the call, said call supervision application further configured to transmit an enable command only if it has received two user's interactions at two different positions of a screen of the mobile device.

7. Call supervision application of any of the claims 1 to 6, wherein the call supervision application comprises a memory to store a setting, said setting defining if the call supervision application is acting on initiate a voice call or send a text message or receive a call.

8. Method to prevent an undue call in a mobile device by a call supervision application, said mobile device comprising a calling application for performing a call, said mobile device further comprising orientation detection means, wherein the method comprises:
- detecting by the orientation detection means the orientation of the mobile device,
- transmitting the orientation of the mobile device to the call supervision application,
- determining if the orientation detected is within an inhibit zone,
- sending a disable command to the calling application when the orientation of the mobile is within the inhibit zone,
- sending an enable command to the calling application when the orientation of the mobile is not within the inhibit zone.

9. Method to prevent an undue call of claim 8, wherein the call supervision application sends a disabling command to the calling application when the orientation detection means detect that the mobile device is pointing in a downward position.

10. Method to prevent an undue call of claims 8 or 9, wherein the calling application is configured to initiate a voice call or send a text message or receive a call.

11. Method of claim 10, wherein it comprises the step of selectively acting on the initiation of a voice call, or sending a text message or receiving a call by the calling application.

12. Method to prevent an undue call of any of the claims 8to 11, wherein it comprises the steps of:
- receiving by the calling application a command to initiate a call,
- and in case that the calling application has received a disable command from the call supervision application, prompting the user to confirm the call, said call supervision application transmitting an enable command only if it has received two user's interactions at two different positions of a screen of the mobile device.

13. Computer -readable medium having instructions thereon that when executed on a mobile device cause a processor to :
- detect the orientation of the mobile device,
- determine if the orientation detected is within an inhibit zone, and
- send a disable command to the calling application when the orientation of the mobile is within the inhibit zone,
- send an enable command to the calling application when the orientation of the mobile is not within the inhibit zone.

14. Computer -readable medium of claim 13, wherein when executed on a mobile device cause a processor to :
- receive from the calling application a notification to initiate a call,
- prompt the user to confirm the call, and
- enable the call only if it has received two user's interactions at two different positions of a screen of the mobile device.

15. Mobile device (MP) comprising an operating system (OS), a memory (ME), at least one calling application (CA) for performing a call in response to a communication action, a call supervision application (CSA) to prevent undue communication actions and orientation detection means (ODA) to detect the orientation of the mobile device (MP), said call supervision application (CSA) being configured to :
- detect by the orientation detection means (ODA) the orientation of the mobile device (MP),
- transmit the orientation of the mobile device to the call supervision application (CSA),
- determine if the orientation detected is within an inhibit zone (IZ),
- sending a disable command to the calling application (CA) when the orientation of the mobile is within the inhibit zone (IZ),
- sending an enable command to the calling application (CA) when the orientation of the mobile is not within the inhibit zone (IZ).
